# EUROPÄISCHE PATENTSCHRIFT

(11) **EP 0 956 465 B1**
(45) Veröffentlichungstag und Bekanntmachung des Hinweises auf die Patenterteilung: **17.04.2002**
(21) Anmeldenummer: 98905120.6
(22) Anmeldetag: 20.01.1998
(51) Int. Cl.: F16G 13/16

(54) **KETTENGLIED MIT EINSCHIEBBAREN TRENNSTEGEN**
CHAIN LINK WITH INSERTABLE SEPARATING PINS
MAILLON DE CHAINE A TRAVERSE DE SEPARATION INSERABLE

(30) Priorität: 30.01.1997 DE 19703410
(43) Veröffentlichungstag der Anmeldung: 17.11.1999
(73) Patentinhaber: Kabelschlepp GmbH, 57074 Siegen (DE)
(72) Erfinder: WEBER, Willibald, D-57250 Netphen (DE)
(74) Vertreter: Kahlhöfer, Hermann, Dipl.-Phys.
(86) Internationale Anmeldenummer: EP9800293
(87) Internationale Veröffentlichungsnummer: WO9834050

(56) Entgegenhaltungen:
- DE-A- 3 709 953
- DE-C- 3 408 912
- DE-U- 9 102 121
- US-A- 4 590 961

## Beschreibung

Der Gegenstand der Erfindung betrifft ein Kettenglied, insbesondere ein Kettenglied einer Energieführungskette, mit den Merkmalen des Oberbegriffs des Anspruchs 1 sowie eine Energieführungskette.

Leitungen, die zu einem beweglichen Verbraucher führen, werden in sogenannten Energieführungsketten verlegt. Die Energieführungskette ist an einem Ende an einem Festpunkt und mit ihrem anderen Ende mit den beweglichen Verbraucher verbunden. Die Energieführungskette ist aus gelenkig miteinander verbundenen Kettengliedern aufgebaut. Ein Kettenglied weist einen Aufnahmeraum auf. Die Aufnahmeräume der einzelnen Kettenglieder bilden einen Kanal, in dem die Leitungen verlegbar sind. Der Aufnahmeraum ist durch zwei voneinander beabstandet, einander gegenüberliegend angeordnete Kettenlaschen sowie eine Platte und eine Traverse begrenzt. Die Platte und die Traverse ist mit jeder Kettenlasche verbunden.

Zur Vermeidung von Schäden an den Leitungen, die im Kanal der Energieführungskette verlegbar sind, ist es bekannt, den Querschnitt des Kanals und somit auch den Aufnahmeraum eines jeden Kettengliedes zu unterteilen. Durch das Gebrauchsmuster G 91 02 121.9 ist eine Energieführungskette zum Führen von Leitungen von einem ortsfesten Anschluß zu einem beweglichen Verbraucher bekannt, bei der der Aufnahmeraum der Kettenlaschen durch Trennstege und Sprossen unterteilt ist. Jeder Trennsteg ist zwischen zwei voneinander beabstandeten, einander gegenüberliegend positionierten Traversen angeordnet. Zur Festlegung eines jeden Trennstegs an den Traversen weist jeder Trennsteg am oberen und unteren Ende eine U-förmige Halterung, die die Traverse umgreift, auf. Desweiteren weist jeder Trennsteg zwischen den Schenkeln U-förmigen Halterung einen Stift auf, der in eine entsprechende Bohrung der Traversen eingegreift, so daß der Trennsteg nicht in Längsrichtung der Traversen verschiebbar ist. Die Traverse ist als ein gesondertes Bauteil des Kettengliedes ausgebildet.

Eine weitere Ausführungsform eines Kettengliedes mit Trennstegen und - sprossen zur Unterteilung des Aufnahmeraumes ist durch die DE 37 09 953 C2 bekannt. Bei dieser Ausführungsform sind zusätzliche Bauteile notwendig, durch die die Trennstege auf den Traversen fixiert werden. So ist beispielsweise ein zusätzlicher Trennsteg ohne U-förmig ausgebildeten Enden notwendig, der eine Paßrippe aufweist, die in eine Paßnut einer Kettenlasche eingreift, wobei ein solcher Trennsteg für jede Kettenlasche notwendig ist, so daß die im mittleren Bereich der Kettenlaschen angeordneten Trennstege durch die zwischen den Trennstegen angeordneten und mit diesen verbundenen Sprossen fixiert werden.

Desweiteren ist ein U-förmig ausgebildetes Kettenglied bekannt, welches Kettenlaschen, die durch eine Platte miteinander verbunden sind, aufweist. Zur Unterteilung des durch das Kettenglied gebildeten Aufnahmeraums sind Trennstege vorgesehen, die in der Platte ausgebildete Ausnehmungen einsteckbar sind.

Durch die DE 34 08 912 C1 ist ein Kettenglied aus Kunststoff einer Energieführungskette mit zwei voneinander beabstandeten, einander gegenüberliegenden Kettenlaschen, die mit einer Platte verbunden sind, bekannt. Die Kettenlaschen und die Platte sind einstückig ausgebildet. Mit den Kettenlaschen ist eine Traverse verbindbar. Das Kettenglied weist desweiteren wenigstens einen mit wenigstens der Platte verbindbaren Trennsteg auf, wobei die Platte wenigstens einer sich im wesentlichen parallel zu einer Kettenlasche erstreckende Nut, die sich lediglich über eine Teillänge der Platte erstreckt und der Trennsteg an wenigstens einem Endabschnitt wenigstens einen zur Nut korrespondierend ausgebildeten Eingriff aufweist.

Problematisch bei dem durch die DE 34 08 912 C1 bekannten Ausgestaltung des Kettengliedes ist, daß der Trennsteg aufgrund der relativ geringen Einstecktiefe des Endabschnitts in die Nut um eine im wesentlichen quer zur Längsachse des Trennstegs und der Nut verlaufende Achse verdrehbar ist, so daß eine stabile Verbindung zwischen dem Trennsteg und der Platte nicht zuverlässig ist. Insbesondere bei einer Energieführungskette, die aus solchen Kettengliedern. aufgebaut ist, besteht manchmal die Notwendigkeit, die in der Kette geführten Leitungen auszutauschen. Während des Austauschs der Leitungen kann der Trennsteg so belastet werden, daß diese aus der Nut herausgedreht wird. Ein nachträgliches Einbringen des Trennstegs in die Nut ist mit einem nicht unerheblichen Montageaufwand verbunden.

Die Ausbildung der Nut im Kettenglied aus Kunststoff erfolgt bei der aus der DE 34 08 912 C1 bekannten Ausgestaltung des Kettengliedes auch relativ auffällig, da entsprechende Formwerkzeuge mit entsprechenden Einsätzen notwendig sind.

Hiervon ausgehend liegt der vorliegenden Erfindung die Aufgabe zugrunde, ein Kettenglied anzugeben, bei dem eine Unterteilung des Aufnahmeraums möglich ist, wobei das Kettenglied kostengünstig herstellbar sein soll. Ein weiteres Ziel der Erfindung ist es eine möglichst einfache Möglichkeit einer Lagefixierung eines Trennsteges bei einem Kettenglied anzugeben. Ein weiteres Ziel der Erfindung ist es eine Energieführungskette anzugeben, die kostengünstig herstellbar ist.

Diese Aufgabe wird erfindungsgemäß durch ein Kettenglied mit den Merkmalen des Anspruchs 1 und einer Energieführungskette mit den Merkmalen des Anspruchs 20 gelöst. Vorteilhafte Weitergestaltungen sind Gegenstand der Unteransprüche.

Bei dem erfindungsgemäßen Kettenglied bilden die Kettenlaschen und die Platte ein einstückiges Bauteil bilden. Die Kettenlaschen und die Platte werden in einem einzigen Herstellungsschritt hergestellt. Hierdurch wird eine wirtschaftlichere Herstellung der Kettenlaschen und der Platte erreicht. Das erfindungsgemäße Kettenglied aus Kunststoff zeichnet sich auch dadurch aus, daß die Platte wenigstens eine sich im wesentlichen parallel zu einer Kettenlasche erstreckende Profilnut und der Trennsteg an wenigstens einem Trennabschnitt mindestens einen zur Profilnut korrespondierend ausgebildeten Eingriff aufweist, der in Längsrichtung der Kettenlasche in die Profilnut einschiebbar ist. Durch die Profilnut in der Platte und den Eingriff am Trennsteg wird eine formschlüssige Verbindung zwischen dem Trennsteg und der Platte erreicht. Die Herstellung eines solchen Kettengliedes wird wesentlich vereinfacht, da aufgrund der Ausgestaltung der Kettenlaschen und der Platte sowie der in der Platte ausgebildeten Profilnut das notwendige Werkzeug einfacher gestaltet werden kann, da eine Entformung des Bauteils im Spritzwerkzeug vereinfacht wird. Zum Entformen des Bauteils ist es ausreichend, daß Spritzwerkzeug in zwei Ebenen aufzufahren.

Bei dem erfindungsgemäßen Kettenglied aus Kunststoff ist durch die Ausgestaltung der Profilnut und des Eingriffs ein Verschieben des Trennstegs quer zur Längserstreckung der Kettenlaschen nicht notwendig, so daß auf zusätzliche Bauteile, wie dies im Stand der Technik notwendig ist, verzichtet werden kann.

Zur formschlüssigen Verbindung des Trennstegs mit der Platte wird vorgeschlagen, daß die Profilnut im Querschnitt T-förmig oder schwalbenschwanzförmig ausgebildet ist. Der Eingriff weist einen dem Querschnitt der Profilnut entsprechenden Querschnitt auf.

Zur Vereinfachung des Einschiebens des Eingriffs in die Profilnut wird vorgeschlagen, daß die Profilnut und der Eingriff sich in ihren Längsrichtungen verjüngen. Durch diese Ausgestaltung wird auch erreicht, daß der Trennsteg eine definierte Lage innerhalb des Aufnahmeraums einnimmt. Durch entsprechende Ausgestaltung der sich verjüngenden Profilnut und des Eingriffs kann auch eine reibschlüssige Verbindung des Trennstegs mit der Platte erreicht werden. Vorzugsweise ist die Profilnut und der Eingriff konisch ausgebildet.

Nach einem weiteren vorteilhaften Gedanken wird vorgeschlagen, daß die Profilnut in einen mittleren Abschnitt der Längserstreckung der Kettenlaschen ausgebildet ist. Die Platte weist vorzugsweise eine im wesentlichen quer zur Längsrichtung der Kettenlaschen verlaufende Wulst auf, in der die Profilnut ausgebildet ist. Durch diese Ausgestaltung wird eine Materialersparnis bei der Ausgestaltung des Kettengliedes erreicht, da die Platte nur eine mindestnotwendige Dicke haben kann. Vorzugsweise ist die Wulst an der Platte angeformt, insbesondere ist die Platte mit der Wulst einstückig ausgebildet.

Nach einer weiteren vorteilhaften Ausgestaltung des Kettengliedes wird vorgeschlagen, daß die Profilnut sich nur über eine Teillänge der Platte bzw. der Wulst erstreckt. Zur Fixierung des Trennstegs ist es ausreichend, wenn der Eingriff sich nur über eine Teilbreite des Trennstegs erstreckt. Vorzugsweise ist der Eingriff höchstens so lang wie die Profilnut.

Während des Betriebes einer Energieführungskette, die aus Kettengliedern aufgebaut ist, kann es durch Erschütterungen und Vibrationen der Energieführungskette zu einer Lösung des Trennstegs von der Platte kommen. Um dies zu verhindern, wird vorgeschlagen, daß die Platte eine sich im wesentlichen quer zur Längserstreckung der Kettenlasche erstreckende Schulter und der Trennsteg mit Abstand zum Eingriff einen Vorsprung aufweist, der zur Anlage an die Schulter bringbar ist. Durch die Kombination-Schulter/Vorsprung wird eine Sicherung des Trennstegs erreicht, so daß der Trennsteg auch durch Vibrationen oder Erschütterungen sich nicht von der Platte löst. Vorzugsweise ist die Schulter durch die Wulst ausgebildet, wodurch eine wirtschaftliche Herstellung des Kettengliedes erhalten bleibt.

Nach einem weiteren vorteilhaften Gedanken wird vorgschlagen, daß der zwischen dem Eingriff und dem Vorsprung liegende Abschnitt des Trennstegs zur Anlage an die Wulst bringbar ist. Durch diese Ausgestaltung wird eine großflächige Krafteinleitung vom Trennsteg in die Wulst bzw. Platte erreicht, wodurch der Trennsteg auch dazu geeignet ist mit Sprossen versehen zu werden, wodurch eine weitere Unterteilung des Aufnahmeraums ermöglicht wird.

Energieführungsketten werden in der Praxis üblicherweise so angeordnet, daß die Kettenlaschen im wesentlichen senkrecht zu einer Auflage für die Energieführungskette verlaufen. Bei einer um 90° gedrehten Anordnung einer Energieführungskette befinden sich die Kettenlaschen in einer zu einer Auflage im wesentlichen parallelen Ebene. Um sicherzustellen, daß das erfindungsgemäße Kettenglied auch für solch eine Anordnung einer Energieführungskette verwendbar ist, wird vorgeschlagen, daß die Traverse Aufnahmen aufweist, in die jeweils ein dem Eingriff gegenüberliegender Endbereich des Trennstegs wenigstens teilweise hineinragt. Durch diese Ausgestaltung stützt sich jeder Trennsteg mit seinem einen Ende an der Traverse und mit seinem anderen Ende an der Platte ab. Die Traverse weist vorzugsweise eine der Profilnuten entsprechende Anzahl von Aufnahmen auf. Dies ist nicht zwingend notwendig. Bevorzugt ist eine Traverse, die eine höhere Anzahl an Aufnahmen aufweist als die Anzahl der Profilnuten. Hierdurch kann eine Traverse für Kettenglieder mit unterschiedlicher Anzahl von Profilnuten verwendet werden. Es versteht sich, daß die Aufnahmen im montierten Zustand der Traverse fluchtend über den Profilnuten liegen.

Vorzugsweise ist die Aufnahme durch wenigstens zwei voneinander beabstandeten, einander gegenüberliegende, sich in Längsrichtung der Kettenlaschen erstreckende Längsrippen gebildet. Jede Aufnahme ist zusätzlich durch zwei voneinander beabstandete, einander gegenüberliegende, sich in Längsrichtung der Kettenlaschen erstreckende Querrippen gebildet. Durch diese Ausgestaltung der Aufnahmen wird der Traverse eine hohe Eigensteifigkeit verliehen, so daß die Traverse auch im Belastungszustand keine Durchbiegung erfährt. Vorzugsweise ist die Traverse des Kettengliedes so ausgebildet, daß die Querrippen für alle Aufnahmen vorgesehen sind, wobei zwischen den Querrippen die Längsrippen ausgebildet sind.

Nach einem weiteren vorteilhaften Gedanken wird vorgeschlagen, daß die Platte und die Traverse deckelförmig ausgebildet sind, so daß der Aufnahmeraum vor äußeren Einflüssen geschützt wird.

Gemäß einem weiteren erfinderischen Gedankens wird eine Energieführungskette mit gelenkig verbundenen Kettengliedern vorgeschlagen, wobei wenigstens ein Kettenglied der Energieführungskette nach einem der Ansprüche 1 bis 21 ausgebildet ist.

Weitere Einzelheiten und Vorteile eines Kettengliedes sowie einer Energieführungskette werden anhand der in der Zeichnung dargestellten Ausführungsbeispiele erläutert. Es zeigen:
- Fig. 1: ein Kettenglied in einer Draufsicht,
- Fig. 2: das Kettenglied im Schnitt der Vorderansicht,
- Fig. 3: einen Trennsteg,
- Fig. 4: das Kettenglied in einer Seitenansicht mit Trennstegen und einer Traverse,
- Fig. 5: das Kettenglied in einer Seitenansicht mit montierten Traverse,
- Fig. 6: das Kettenglied mit Trennsteg und Traverse im Schnitt in einer Vorderansicht,
- Fig. 7: vergrößert eine Profilnut in der Platte und einen Trennsteg in einer Seitenansicht und im Schnitt,
- Fig. 8: vergrößert einen Trennsteg in einer Vorderansicht im Schnitt,
- Fig. 9: eine Draufsicht einer als Deckel ausgebildeten Traverse,
- Fig. 10: eine Vorderansicht der Traverse,
- Fig. 11: eine Unteransicht der Traverse,
- Fig. 12: einen Abschnitt einer Energieführungskette im Längsschnitt.

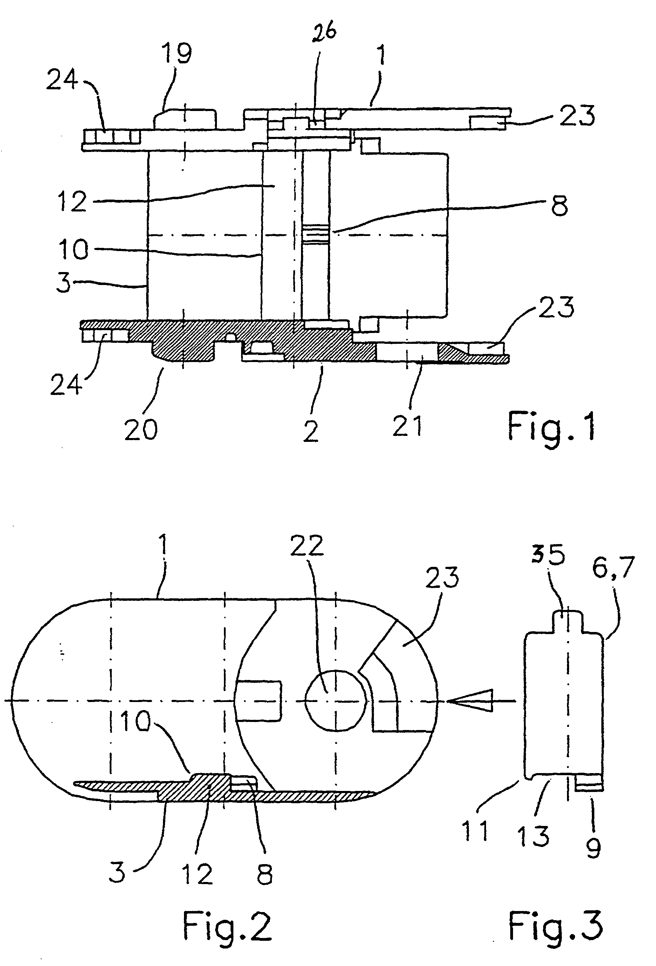

Fig. 1 zeigt ein Ausführungsbeispiel eines Kettengliedes aus Kunststoff in einer Draufsicht im Teilschnitt. Das Kettenglied weist zwei voneinander beabstandete, einander gegenüberliegende Kettenlaschen 1, 2 auf. Die Kettenlaschen 1, 2 sind mit einer Platte 3 verbunden. Die Kettenlaschen 1, 2 und die Platte 3 bilden ein im wesentlichen U-förmiges Kettenglied. Die Kettenlasche 1 weist an einem Endbereich und auf der der Kettenlasche 2 abgewandten Fläche einen Gelenkbolzen 19 auf. In dem dem Gelenkbolzen 19 gegenüberliegenden Endbereich ist eine Gelenkbohrung 22 ausgebildet. Die Gelenkbohrung 22 ist so gestaltet, daß ein Gelenkbolzen 19 eines benachbarten Kettengliedes in der Gelenkbohrung 22 verschwenkbar ist. Zur Begrenzung eines Verschwenkwinkels benachbarter Kettenglieder weist jede Kettenlasche 1, 2 eine Vertiefung 23 auf, die im Bereich der Gelenkbohrung 22 bzw. 21 der Kettenlasche 2 ausgebildet ist. Die Kettenlasche 2 ist entsprechend der Kettenlasche 1 ausgebildet. Die Kettenlasche 2 weist einen Gelenkbolzen 20 sowie eine Gelenkbohrung 21 auf.

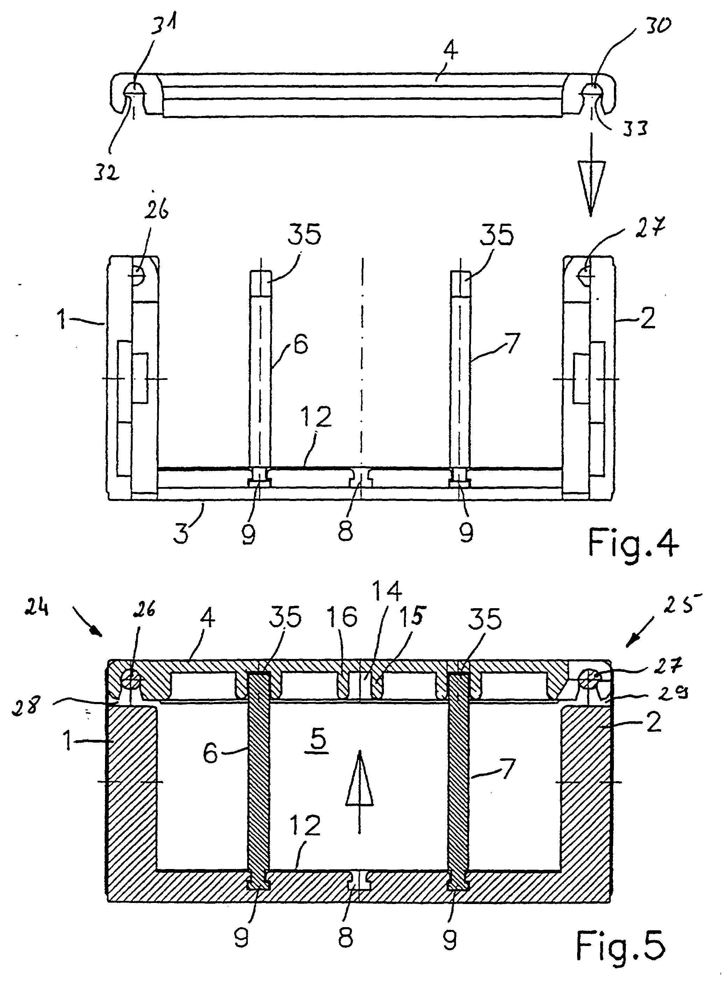

Die Platte 3 weist eine Profilnut 8 auf, die sich im wesentlichen parallel zu den Kettenlaschen 1, 2 erstreckt. In dem dargestellten Ausführungsbeispiel hat die Profilnut 8 einen im wesentlichen T-förmigen Querschnitt, wie dies insbesondere aus der Fig. 7 entnehmbar ist. In der Fig. 1 ist lediglich eine Profilnut 8 in der Platte 3 ausgebildet. Wie aus der Fig. 4 bzw. 5 ersichtlich ist, kann die Platte 3 mehrere Profilnuten 8 aufweisen. Die Anzahl der Profilnuten 8 richtet sich im wesentlichen nach dem Anforderungsprofil an ein Kettenglied.

Die Profilnut 8 dient zur Festlegung eines Trennstegs 6, 7 wie er in der Fig. 3 dargestellt ist. Der Trennsteg 6, 7 weist an einem Endabschnitt einen Eingriff 9, dessen Querschnitt entsprechend der Profilnut 8 ausgebildet ist. Der Querschnitt des Eingriffs 9 ist im wesentlichen T-förmig, wie dies insbesondere aus der Fig. 7 ersichtlich ist. In dem darstellten Ausführungsbeispiel weist der Trennsteg 6, 7 einen Eingriff, der sich lediglich über eine Teilbreite des Trennstegs erstreckt auf. Die Teilbreite des Eingriffs 9 entspricht im wesentlichen der Länge der Profilnut 8. Beabstandet zu dem Eingriff 9 ist der Trennsteg mit einem Vorsprung 11 versehen.

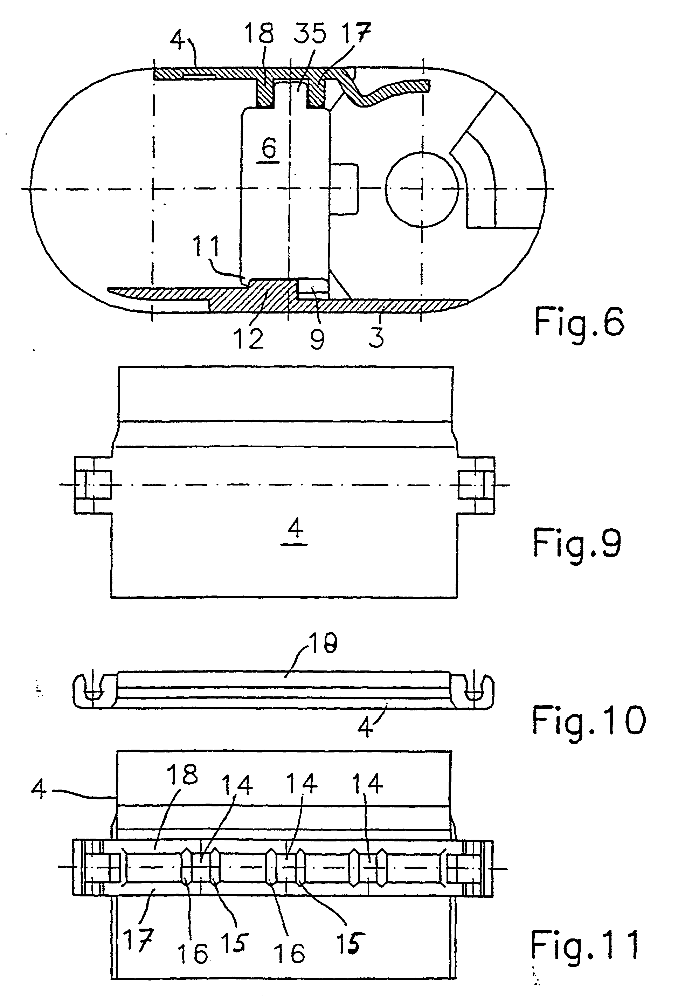

Der Trennsteg 6, 7 ist in die Profilnut 8 einschiebbar. In der Fig. 6 ist der mit der Platte 3 verbundene Trennsteg 6 dargestellt. Der Eingriff 9 des Trennstegs 6 ist in der Profilnut 8 gehaltert. Der Vorsprung 11 des Trennstegs 6 liegt an einer Schulter 10 an. Die Schulter 10 ist an der Platte 3 ausgebildet. Die Schulter 10 erstreckt sich im wesentlichen quer zur Längsrichtung der Kettenlaschen, wie dies aus der Fig. 1 ersichtlich ist. Die Schulter 10 ist durch eine Wulst 12 gebildet. Die Wulst 12 ist mit der Platte 3 einstückig ausgebildet. Sie erstreckt sich vorzugsweise über die gesamte Breite der Platte 3.

Zwischen dem Eingriff 9 und dem Eingriff 11 des Trennstegs 6 ist ein Abschnitt 13 ausgebildet, der im montierten Zustand des Trennstegs 6 an der Wulst 12 anliegt.

In dem dargestellten Ausführungsbeispiel verjüngt sich die Profilnut 8 und der Eingriff 9 in Längsrichtung. Vorzugsweise ist die Profilnut 8 und der Eingriff 9 konisch ausgebildet.

Die Traverse 4 des Kettengliedes ist in dem dargestellten Ausführungsbeispiel deckelförmig ausgebildet. Die Traverse 4 ist mit der Kettenlasche und 2 lösbar durch ein scharnierartig ausgebildetes Gelenk 24, 25 verbunden. Jede Kettenlasche weist einen Gelenkzapfen 26, 27 auf, der in einer Freiarbeitung 28, 29 der Kettenlasche 1 bzw. 2 ausgebildet ist.

Die deckelförmig ausgebildete Traverse 4 weist Ausnehmungen 30, 31 auf, die jeweils eine Hinterschneidung 32, 33 aufweisen. Die Traverse 4 kann vollständig von den Kettenlaschen 1, 2 oder lediglich von der Lasche 1 bzw. 2 gelöst werden und anschließend um den Gelenkzapfen 26 bzw. 27 verschwenkt werden.

Die Traverse 4 weist Aufnahmen 14 auf, in die jeweils ein dem Eingriff 9 gegenüberliegende Endbereich 35 des Trennstegs 6 bzw. 7 wenigstens teilweise hineinragt. Der Endbereich 35 des Trennstegs 6, 7 ist laschenförmig ausgebildet. Jede Aufnahme 14 ist durch zwei voneinander beabstandete, einander gegenüberliegende, sich in Längsrichtung der Kettenlaschen 1, 2 erstreckende Längsrippen 15, 16 gebildet. In dem dargestellten Ausführungsbeispiel ist jede Aufnahme 14 durch zwei voneinander beabstandete, einander gegenüberliegende, sich quer zur Längsrichtung der Kettenlaschen 1, 2 erstreckende Querrippen 17, 18 begrenzt. Die Querrippen 17, 18 sind für alle Aufnahmen 14 vorgesehen, wobei zwischen den Querrippen 17, 18 die Längsrippen 15, 16 ausgebildet sind, wie dies insbesondere aus der Fig. 11 ersichtlich ist.

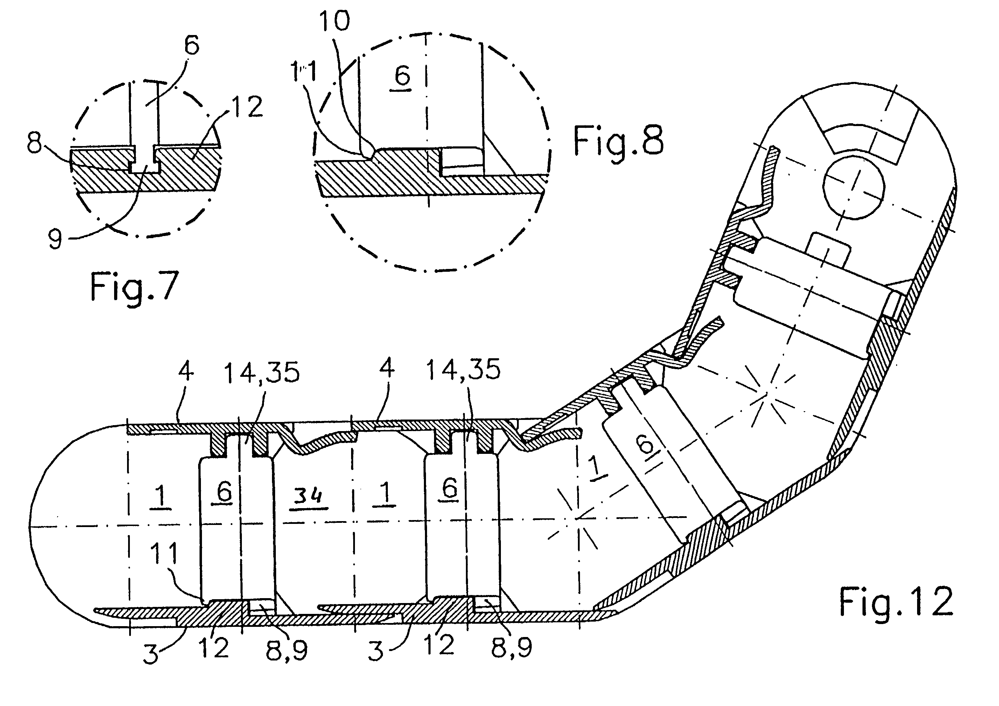

Die in den Figuren 9 bis 10 dargestellte Traverse ist im wesentlichen deckelförmig ausgebildet. Dies gilt auch für die Platte 3. Bei mehreren zusammengesetzten Kettengliedern zu einer Energieführungskette, wie sie in der Fig. 12 dargestellt ist, ist der Aufnahmekanal der Energieführungskette im wesentlichen abgeschlossen. Durch die Trennstege 6, 7 erfolgt eine Unterteilung des Aufnahmeraums 5 des Kettengliedes bzw. des Kanals der Energieführungskette in Längsrichtung. Eine Unterteilung des Aufnahmeraums 5 bzw. des Aufnahmekanals 34 kann auch in Querrichtung erfolgen. Hierzu können die Trennstege mit nicht dargestellten Sprossen verbunden werden.

### BEZUGSZEICHENLISTE

- 1, 2: Kettenlasche
- 3: Platte
- 4: Traverse
- 5: Aufnahmeraum
- 6, 7: Trennsteg
- 8: Profilnut
- 9: Eingriff
- 10: Schulter
- 11: Vorsprung
- 12: Wulst
- 13: Abschnitt
- 14: Aufnahme
- 15, 16: Längsrippe
- 17, 18: Querrippe
- 19, 20: Gelenkbolzen
- 21, 22: Gelenkbohrung
- 23: Vertiefung
- 24, 25: Gelenk
- 26, 27: Gelenkzapfen
- 28, 29: Freiarbeitung
- 30, 31: Ausnehmung
- 32, 33: Hinterschneidung
- 34: Aufnahmekanal
- 35: Endbereich

## Patentansprüche

1. Kettenglied aus Kunststoff, insbesondere Kettenglied einer Energieführunaskette, mit zwei voneinander beabstandeten, einander gegenüberliegenden Kettenlaschen (1, 2), die mit einer Platte (3) verbunden sind, wobei die Kettenlaschen (1, 2) und die Platte (3) einstückig ausgebildet sind, einer Traverse (4), die mit den Kettenlaschen (1, 2) verbindbar ist, und mit wenigstens einem mit wenigstens der Platte (3) verbindbaren Trennsteg (6, 7), wobei die Platte (3) wenigstens eine sich im wesentlichen parallel zur einer Kettenlasche (1, 2) erstreckende Nut, die sich lediglich über eine Teillänge der Platte (5) erstreckt und der Trennsteg (6, 7) an wenigstens einem Endabschnitt (9) mindestens einen zur Nut (8) korrespondierend ausgebildeten Eingriff (9) aufweist, **dadurch gekennzeichnet, daß** die Nut als eine Profilnut (8) ausgebildet ist, daß der Endabschnitt (9) in Längsrichtung der Kettenlaschen (1, 2) in die Profilnut (8) einschiebbar ist, daß der Eingriff (9) sich nur über eine Teilbreite des Trennstegs (6, 7) erstreckt, und daß die Platte (3) eine sich im wesentlichen quer zur Längsrichtung der Kettenlaschen (1, 2) erstreckende Schulter (10) und der Trennsteg (6, 7) mit Abstand zum Eingriff (9) einen Vorsprung (11) aufweist, der zur Anlage an die Schulter (10) bringbar ist.

2. Kettenglied nach Anspruch 1, **dadurch gekennzeichnet, daß** die Profilnut (8) im Querschnitt T-förmig ausgebildet ist.

3. Kettenglied nach Anspruch 1, **dadurch gekennzeichnet, daß** die Profilnut (8) im Querschnitt schwalbenschwanzförmig ausgebildet ist.

4. Kettenglied nach Anspruch 1, 2 oder 3, **dadurch gekennzeichnet, daß** die Profilnut (8) und der Eingriff (9) sich in ihren Längsrichtungen verjüngen.

5. Kettenglied nach Anspruch 4, **dadurch gekennzeichnet, daß** die Profilnut (8) und der Eingriff (9) konisch ausgebildet sind.

6. Kettenglied nach einem der Ansprüche 1 bis 5, **dadurch gekennzeichnet, daß** die Profilnut (8) in einem mittleren Abschnitt der Längserstreckung der Kettenlaschen (1, 2) ausgebildet ist.

7. Kettenglied nach einem der Ansprüche 1 bis 6, **dadurch gekennzeichnet**, die Platte (3) eine im wesentlichen quer zur Längsrichtung der Kettenlaschen (1, 2) verlaufende Wulst (12) aufweist, in der die Profilnut (8) ausgebildet ist.

8. Kettenglied nach Anspruch 7, **dadurch gekennzeichnet, daß** die Wulst (12) an der Platte (3) angeformt ist.

9. Kettenglied nach Anspruch 8, **dadurch gekennzeichnet, daß** die Platte (3) mit der Wulst (12) einstückig ausgebildet ist.

10. Kettenglied nach einem der Ansprüche 7 bis 9, **dadurch gekennzeichnet, daß** die Profilnut (8) sich nur über eine Teillänge der Wulst (12) erstreckt.

11. Kettenglied nach einem der Ansprüche 1 bis 10, **dadurch gekennzeichnet, daß** der Eingriff (9) höchstens so lang ist wie die Profilnut (8).

12. Kettenglied nach einem der Ansprüche 1 bis 11, **dadurch gekennzeichnet, daß** die Schulter (10) durch eine Wulst (12) gebildet ist.

13. Kettenglied nach Anspruch 12, **dadurch gekennzeichnet, daß** der zwischen dem Eingriff (9) und dem Vorsprung (11) liegende Abschnitt (13) des Trennstegs (6, 7) zur Anlage an die Wulst (12) bringbar ist.

14. Kettenglied nach einem der Ansprüche 1 bis 13, **dadurch gekennzeichnet, daß** die Traverse (4) Aufnahmen (14) aufweist, in die jeweils ein dem Eingriff (9) gegenüberliegender Endbereich (35) des Trennstegs (6, 7) wenigstens teilweise hineinragt.

15. Kettenglied nach Anspruch 14, dadurch gekennzeichent, daß der Endbereich (15) des Trennstegs (6, 7) laschenförmig ausgebildet ist.

16. Kettenglied nach Anspruch 14 oder 15, **dadurch gekennzeichnet, daß** die Aufnahme (14) wenigstens durch zwei voneinander beabstandete, einander gegenüberliegende, sich in Längsrichtung der Kettenlaschen (1, 2) erstreckende Längsrippen (15, 16) gebildet ist.

17. Kettenglied nach Anspruch 16, **dadurch gekennzeichnet, daß** jede Aufnahme (14) zusätzlich durch zwei voneinander beabstandete, einander gegenüberliegende, sich quer zur Längsrichtung der Kettenlaschen (1, 2) erstreckende Querrippen (17, 18) gebildet ist.

18. Kettenglied nach Anspruch 16, **dadurch gekennzeichnet, daß** die Querrippen (17, 18) für alle Aufnahmen (14) vorgesehen sind, wobei zwischen den Querrippen (17, 18) die Längsrippen (15, 16) ausgebildet sind.

19. Kettenglied nach einem der Ansprüche 1 bis 18, **dadurch gekennzeichnet, daß** die Platte (3) und die Traverse (4) deckelförmig ausgebildet sind.

20. Energieführungskette mit gelenkieg verbundenen Kettengliedern, wobei wenigstens ein Kettenglied nach einem der Ansprüche 1 bis 19 ausgebildet ist.

## Claims

1. A chain link member of plastic material, in particular a chain link member of an energy guide chain, comprising two spaced-apart, mutually oppositely disposed link plates (1, 2), which are connected to a plate (3), wherein the link plates (1, 2) and the plate (3) are of a one-piece configuration, a transverse portion (4) which can be connected to the link plates (1, 2), and with at least one dividing web (6, 7) which can be connected to at least the plate (3), wherein the plate (3) has at least one groove extending substantially parallel to a link plate (1, 2), the groove extending only over a partial length of the plate (5) and the dividing web (6, 7) having at at least one end portion (9) at least one engagement portion (9) which is of a configuration corresponding to the groove (8), **characterized in that** the groove is of a configuration of a shaped groove (8), that the end portion (9) is insertable into the shaped groove (8), that the engagement portion (9) extends only over a partial width of the dividing web (6, 7) and that the plate (3) has a shoulder (10) extending substantially transversely with respect to the longitudinal direction of the link plate (1, 2) and the dividing web (6, 7) comprises a projection (11) that is spaced to the engagement portion (9), wherein the projection (11) can be brought to bear against the shoulder (10).

2. A chain link member according to claim 1, **characterized in that** the shaped groove (8) is of a T-shaped configuration in cross-section.

3. A chain link member according to claim 1, **characterized in that** the shaped groove (8) is of a dovetail-shaped configuration in cross-section.

4. A chain link member according to claim 1, 2 or 3, **characterized in that** the shaped groove (8) and the engagement portion (9) narrow in their longitudinal directions.

5. A chain link member according to claim 4, **characterized in that** the shaped groove (8) and the engagement portion (9) are of a conical configuration.

6. A chain link member according to one of claims 1 to 5, **characterized in that** the shaped groove (8) is formed in a central portion of the longitudinal extent of the link plates (1, 2).

7. A chain link member according to one of claims 1 to 6, **characterized in that** the plate (3) has a ridge (12) which extends substantially transversely to the longitudinal direction of the link plates (1, 2) and in which the shaped groove (8) is provided.

8. A chain link member according to claim 7, **characterized in that** the ridge (12) is formed on the plate (3).

9. A chain link member according to claim 8, **characterized in that** the plate (3) is formed integrally with the ridge (12).

10. A chain link member according to one of claims 7 to 9, **characterized in that** the shaped groove (8) extends only over a partial width of the ridge (12).

11. A chain link member according to one of claims 1 to 10, **characterized in that** the engagement portion (9) is at most as long as the shaped groove (8).

12. A chain link member according to one of claims 1 to 11, **characterized in that** the shoulder (10) is formed by a ridge (12).

13. A chain link member according to claim 12, **characterized in that** the portion (13) of the dividing web (6, 7), which is between the engagement portion (9) and the projection(11), can be brought to bear against the ridge (12).

14. A chain link member according to one of claims 1 to 13, **characterized in that** the transverse portion (4) is provided with recesses (14) into which there at least partially projects a respective end region (35) of the dividing web (6, 7) which end region (35) is opposite to the engagement portion (9).

15. A chain link member according to claim 14, **characterized in that** the end region (15) of the dividing web (6, 7) is of a tongue-like configuration.

16. A chain link member according to claim 14 or 15, **characterized in that** the recess (14) is formed at least by two spaced-apart, mutually oppositely disposed longitudinal ribs (15, 16) extending in the longitudinal direction of the link plates (1, 2).

17. A chain link member according to claim 16, **characterized in that** each recess (14) is additionally formed by two spaced-apart, mutually oppositely disposed transverse ribs (17, 18) extending transversally with respect to the longitudinal direction of the link plates (1, 2).

18. A chain link member according to claim 16, **characterized in that** the transverse ribs (17, 18) are provided for all recesses (14), the longitudinal ribs (15, 16) being provided between the transverse ribs (17, 18).

19. A chain link member according to one of claims 1 to 18, **characterized in that** the plate (3) and the transverse portion (4) are formed as a cover.

20. An energy guide chain with hingedly connected chain link members, wherein at least one chain link member is of a configuration according to one of the claims 1 to 19.

## Revendications

1. Maillon de chaîne en matiére plastique, notamment un maillon de chaîne d'une chaîne de transmission d'énergie, avec deux éclisses de chaîne (1, 2) à distance l'une de l'autre, situées vis à-vis, qui sont reliées à une plaque (3), les éclisses de chaîne (1, 2) étant réalisées d'un seul tenant avec la plaque (3), avec une traverse (4) qui peut être reliée aux éclisses de chaîne (1, 2) et avec au moins une entretoise de séparation (6, 7) pouvant être reliée à au moins la plaque (3), la plaque (3) présentant au moins une rainure s'étendant de façon sensiblement parallèle à une éclisse de chaîne (1, 2), la rainure s'étendant uniquement sur une longueur partielle de la plaque (5) et l'entretoise de séparation (6, 7) présentant à au moins une section d'extrémité (9) au moins une engrenure (9) réalisée de façon correspondante à la rainure (8), **caractérisé en ce que** la rainure est formée en tant que rainure profilée (8), qu'en direction longitudinale des éclisses de chaîne la section d'extrémité (9) est insérable dans la rainure profilée (8), que l'engrenure (9) s'étend uniquement sur une largeur partielle de l'entretoise de séparation (6, 7) et que la plaque (3) présente un épaulement (10) s'étendant sensiblement de façon transversale à la direction longitudinale des éclisses de chaîne (1, 2) et que l'entretoise de séparation (6, 7) présente une saillie (11) à distance de l'engrenure (9), la saillie pouvant être amenée en butée contre l'épaulement (10).

2. Maillon de chaîne selon la revendication 1, **caractérisé en ce que** la rainure profilée (8) est réalisée avec une section en forme de T.

3. Maillon de chaîne selon la revendication 1, **caractérisé en ce que** la rainure profilée (8) est réalisée avec une section en forme de queue d'aronde.

4. Maillon de chaîne selon la revendication 1, 2 ou 3, **caractérisé en ce que** la rainure profilée (8) et l'engrenure rétrécissent en leurs directions longitudinales.

5. Maillon de chaîne selon la revendication 4, **caractérisé en ce que** la rainure profilée (8) et l'engrenure (9) sont réalisées de forme conique.

6. Maillon de chaîne selon l'une des revendications 1 à 5, **caractérisé en ce que** la rainure profilée (8) est réalisée dans une section centrale de l'étendue longitudinale des éclisses de chaîne (1, 2).

7. Maillon de chaîne selon une des revendications 1 à 6, **caractérisé en ce que** la plaque (3) présente un bourrelet (12) s'étendant sensiblement de façon transversale à la direction longitudinale des éclisses de chaîne (1, 2), la rainure profilée (8) étant réalisée dans le bourrelet (12).

8. Maillon de chaîne selon la revendication 7, **caractérisé en ce que** le bourrelet (12) est formé sur la plaque (3).

9. Maillon de chaîne selon la revendication 8, **caractérisé en ce que** la plaque (3) est réalisée d'un seul tenant avec le bourrelet (12).

10. Maillon de chaîne selon l'une des revendications 7 à 9, **caractérisé en ce que** la rainure profilée (8) s'étend uniquement sur une longueur partielle du bourrelet (12).

11. Maillon de chaîne selon l'une des revendications 1 à 10, **caractérisé en ce que** l'engrenure (9) est tout au plus aussi longue que la rainure profilée (8).

12. Maillon de chaîne selon l'une des revendications 1 à 11, **caractérisé en ce que** l'épaulement (10) est formé par un bourrelet (12).

13. Maillon de chaîne selon la revendication 12, **caractérisé en ce que** la section (13) de l'entretoise de séparation (6, 7) se trouvant entre l'engrenure (9) et la saillie (11) peut être amenée en butée contre le bourrelet (12).

14. Maillon de chaîne selon l'une des revendications 1 à 13, **caractérisé en ce que** la traverse (4) présente des logements (14), dans lesquels respectivement une zone d'extrémité (35) de l'entretoise de séparation (6, 7), située de façon opposée à l'engrenure (9), entre au moins partiellement.

15. Maillon de chaîne selon la revendication 14, **caractérisé en ce que** la zone d'extrémité,(15) de l'entretoise de séparation (6, 7) est réalisée en forme d'éclisse.

16. Maillon de chaîne selon la revendication 14 ou 15, **caractérisé en ce que** le logement (14) est formé par au moins deux cannelures longitudinales (15, 16) à distance l'une de l'autre, opposées et s'étendant en direction longitudinale des éclisses de chaîne (1, 2).

17. Maillon de chaîne selon la revendication 16, **caractérisé en ce que** chaque logement (14) est en outre formé par deux cannelures transversales (17, 18) à distance l'une de l'autre, opposées et s'étendant transversalement à la direction longitudinale des éclisses de chaîne (1, 2).

18. Maillon de chaîne selon la revendication 16, **caractérisé en ce que** les cannelures transversales (17, 18) sont prévues pour tous les logements (14), les cannelures longitudinales (15, 16) étant formées entre les cannelures transversales (17, 18).

19. Maillon de chaîne selon l'une des revendications 1 à 18, **caractérisé en ce que** la plaque (3) et la traverse (4) sont réalisées en forme de couvercle.

20. Chaîne de transmission d'énergie avec des maillons de chaîne reliés de manière articulée, au moins un maillon de chaîne étant réalisé selon l'une des revendications 1 à 19.
